# EUROPÄISCHE PATENTANMELDUNG

(11) **EP 1 818 288 A1**
(43) Veröffentlichungstag der Anmeldung: **15.08.2007**
(21) Anmeldenummer: 07000217.5
(22) Anmeldetag: 08.01.2007
(51) Int. Cl.: B65G 13/02

(54) **Satz von Rollenbahnförderern**

(30) Priorität: 08.02.2006 DE 102006005980
(71) Anmelder: EISENMANN Anlagenbau GmbH & Co. KG, 71032 Böblingen (DE)
(72) Erfinder: Swoboda, Werner, 71032 Böblingen (DE)
(74) Vertreter: Ostertag, Ulrich

(57) **Zusammenfassung**

Es wird ein Satz von Rollenbahnförderern (1) beschrieben, deren Mitglieder jeweils in bekannter Weise eine Vielzahl von in zwei parallelen Spuren angeordneten angetriebenen Rollen (2) umfassen. Jedes Mitglied dieses Satzes besitzt mindestens einen elektrischen Einspeiseblock (6), der mit der örtlich verfügbaren Netzspannung (5) verbindbar ist und hieraus eine Ausgangsspannung erzeugt, die für alle Mitglieder des Satzes dieselbe und kleiner oder gleich der kleinsten Netzspannung ist, für die ein Mitglied des Satzes ausgelegt ist. Die Antriebsmotoren der angetriebenen Rollen (2) sind dabei für die Ausgangsspannung des Einspeiseblocks (6) ausgelegt. Auf diese Weise kann der Hersteller der Rollenbahnen (1) unabhängig von den von Ort zu Ort unterschiedlichen verfügbaren Netzspannungen Planung, Lagerhaltung und Montage eines Rollenbahnförderers (1) vornehmen und auf diese Weise die hiermit verbundenen Kosten erheblich reduzieren.

## Beschreibung

Die Erfindung betrifft einen Satz von Rollenbahnförderern, dessen Mitglieder jeweils umfassen:
a) eine Vielzahl von in zwei parallelen Spuren angeordneten angetriebenen Rollen;
b) eine Vielzahl von elektrischen Antriebsmotoren für die angetriebenen Rollen;
c) einen Anschluß zur Verbindung mit der örtlichen Netzspannung .

Rollenbahnförderer werden zum Transport von Warenträgern wie z.B. Paletten eingesetzt. In der Automobilindustrie werden mit ihnen häufig Fahrzeugkarosserien oder Teile von Fahrzeugkarosserien zwischen einzelnen Bearbeitungsstationen transportiert. Die Fahrzeugkarosserien sind dabei auf sogenannten "Skids" befestigt. Damit werden Transportgestelle bezeichnet, die zwei zueinander parallele Skidkufen aufweisen. Die Skidkufen liegen während des Fördervorganges auf Rollen des Rollenbahnförderers auf, die auf zwei Spuren und in Förderrichtung hintereinander angeordnet sind. Werden die Rollen in Drehung versetzt, wird der Skid mit der daran befestigten Fahrzeugkarosserie in Förderrichtung gefördert, wobei es ausreicht, nur einen Teil der Rollen mit einem Drehantrieb zu versehen.

Die Hersteller von Rollenbahnförderer der eingangs genannten Art, wie sie derzeit auf dem Markt sind, sind im allgemeinen weltweit tätig. Sie treffen in verschiedenen Ländern, in denen sie Rollenbahnförderer zum Einsatz bringen sollen, auf sehr unterschiedliche örtlich verfügbare Netzspannungen. Häufig anzutreffen sind Spannungen, die zwischen 200 V und bis zu 600 V liegen. Die unterschiedlichen örtlich verfügbaren Ausgangsspannungen zwingen die Hersteller der Rollenbahnförderer dazu, jeweils jeden herzustellenden Rollenbahnförderer neu zu planen, entsprechend der örtlich verfügbaren Netzspannung Komponenten einzukaufen, individuell zu montieren und zu verkabeln und eine aufwendige Lagerhaltung für unterschiedliche Komponenten vorzusehen. Die Stückzahlen der einzelnen Komponenten verbleiben vergleichsweise klein. All dies trägt zu verhältnismäßig hohen Kosten bei.

Aufgabe der vorliegenden Erfindung ist es, einen Satz von Rollenbahnförderern der eingangs genannten Art zu schaffen, mit dem sich die Installations-, Wartungs-, Planungs- und Lagerhaltungskosten reduzieren lassen.

Diese Aufgabe wird erfindungsgemäß dadurch gelöst, daß
d) jedes Mitglied des Satzes mindestens einen elektrischen Einspeiseblock aufweist, der mit der örtlichen Netzspannung verbindbar ist und hieraus eine Ausgangsspannung erzeugt, die für alle Mitglieder des Satzes dieselbe und kleiner oder gleich der kleinsten Netzspannung ist, für die ein Mitglied des Satzes ausgelegt ist;
e) die Antriebsmotoren der angetriebenen Rollen für die Ausgangsspannung des Einspeiseblocks ausgelegt sind.

Die erfindungsgemäße Konzeption zur Reduzierung der Kosten ist somit folgende:

Ein Hersteller von Rollenbahnen legt eine bestimmte, aus seiner Sicht optimale Betriebsspannung für die Antriebsmotoren fest, die dann für alle zu installierenden Anlagen weltweit, unabhängig von der dort verfügbaren Netzspannung, eingehalten wird. Die Erzeugung dieser "genormten" Betriebsspannung für die Antriebsmotoren der angetriebenen Rollen aus der jeweils verfügbare Netzspannung erfolgt sodann durch individuelle Einspeiseblocks. Die Planung eines Mitgliedes aus dem erfindungsgemäßen Satz von Rollenbahnförderern kann also weitestgehend unabhängig von den örtlichen Gegebenheiten vorgenommen werden; es werden weitestgehend identische Bauteile eingesetzt, die in verhältnismäßig großen Stückzahlen vorgefertigt werden können. Individuell an die örtlichen Gegebenheiten anzupassen ist ausschließlich der elektrische Einspeiseblock, der die Umsetzung von der örtlich verfügbaren Netzspannung auf die "genormte" Betriebsspannung der Antriebsmotoren vornimmt.

Die Anpassung der örtlich verfügbaren Netzspannung an die Betriebsspannung der Antriebsmotoren kann beispielsweise so geschehen, daß der Hersteller der Rollenbahnförderer eine Vielzahl von unterschiedlichen Einspeiseblocks vorhält, die für unterschiedliche Netzspannungen ausgelegt sind, aber alle dieselbe Betriebsspannung für die Antriebsmotoren der angetriebenen Rollen erzeugen können. Bei dieser Konzeption gibt es also ebensoviele unterschiedliche Arten von Einspeiseblocks wie im Tätigkeitsgebiet des Herstellers von Rollenbahnförderern unterschiedliche Netzspannungen anzutreffen sind.

Sehr viel bequemer ist allerdings diejenige Ausführungsform der Erfindung, bei welcher nur eine Art von Einspeiseblock vorgesehen ist, die so ausgestaltet ist, daß sie selbsttätig bei verschiedenen Netzspannungen an ihrem Eingang dieselbe Betriebsspannung für die Antriebsmotoren der angetriebenen Rollen erzeugen kann. Derartige Schaltungen sind dem Fachmanne bekannt; sie brauchen hier also nicht näher erläutert zu werden. Bei Verwendung eines solchen "adaptiven" Einspeiseblocks kann also die Planung und der Bau eines Rollenbahnförderers vollständig unabhängig von den örtlichen Gegebenheiten erfolgen. Der erfindungsgemäße "adaptive" Einspeiseblock stellt aus der örtlich verfügbaren Netzspannung immer selbsttätig die gewünschte "genormte" Betriebsspannung für die Antriebsmotoren bereit.

Bei einer vorteilhaften Ausführungsform weist jedes Mitglied des Satzes von Rollenbahnförderern eine Vielzahl von gleichen Einspeiseblocks auf, die in Abständen voneinander angeordnet sind und jeweils die Antriebsmotoren der angetriebenen Rollen in einem zugeordneten Segment des Rollenbahnförderers speisen. Durch diese Einspeisung der Betriebsspannung an unterschiedlichen Stellen des Rollenbahnförderers können Spannungsabfälle vermieden werden, die sonst bei Verwendung nur eines einzigen Einspeiseblocks und sehr langen Rollenbahnförderern eintreten könnten.

Die Betriebsspannung der Antriebsmotoren, bei der es sich vorzugsweise um eine Gleichspannung handelt, sollte kleiner als 60 V sein. Derartige "Niederspannungen" verringern die Sicherheitsanforderungen und die Kosten der zum Einsatz kommenden Halbleiterbauelemente sowie deren Verluste, so daß auch durch diese Maßnahme geringere Kosten anfallen.

Ein besonders glücklicher Kompromiss ist, wenn die Betriebsspannung der Antriebsmotoren für die angetriebenen Rollen etwa 48 V beträgt. Dann sind die Vorteile, die mit dem "Niederspannungskonzept" verbunden sind, bereits sehr stark ausgeprägt, ohne daß jedoch die Ströme, die im Einzelfalle fließen, zu große Werte annehmen müßten.

Günstig ist auch, eine Betriebsspannung von 24 V einzusetzen, weil viele Halbleiterkomponenten oder Halbleiterschaltungen, die im Handel erhältlich sind, auf eine solche Betriebsspannung ausgelegt sind.

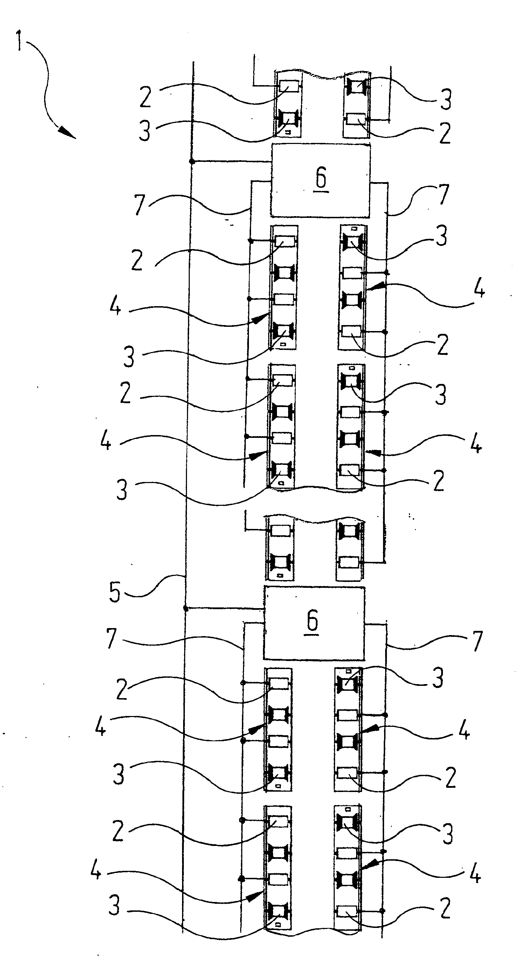

Ein Ausführungsbeispiel der Erfindung wird nachfolgend anhand der Zeichnung näher erläutert; die einzige Figur zeigt in schematischer Draufsicht einen Rollenbahnförderer mit einem Teil der zugehörigen Verkabelung.

Der in der Zeichnung dargestellte und insgesamt mit dem Bezugszeichen 1 gekennzeichnete Rollenbahnförderer umfaßt in zwei Spuren, die parallel zueinander verlaufen, eine Vielzahl von angetriebenen Rollen 2 und freilaufenden Rollen 3. In Längsrichtung des Rollenbahnförderers 1, die gleichzeitig Transportrichtung ist, wechseln sich jeweils eine angetriebene Rolle 2 und eine freilaufende Rolle 3 ab, wobei sich in den beiden Spuren jeweils eine angetriebene Rolle 2 und eine freilaufende Rolle 3 gegenüberstehen.

Jeweils vier Rollen, davon zwei angetriebene Rollen 2 und zwei freilaufende Rollen 3, sind in einem gemeinsamen Rechteck- oder U-Hohlprofil gelagert und bilden auf diese Weise eine Rollenleiste 4. Die beiden Spuren des Rollenbahnförderers 1 sind durch Hintereinanderreihen von im wesentlichen identischen Rollenleisten 4 aufgebaut.

Bei den elektrischen Antriebsmotoren, welche die verschiedenen angetriebenen Rollen 2 in Drehung versetzen, handelt es sich um in der Zeichnung nicht erkennbare Naben-Gleichstrommotoren, die vorzugsweise mit einer Spannung von 48 V betrieben werden. Die Betriebsspannung der Antriebsmotoren wird vom jeweiligen Hersteller des Rollenbahnförderers 1 in dem Sinne "normiert", daß sie für alle Anwendungsfälle in allen Ländern dieselbe ist.

Am Aufstellungsort des Rollenbahnförderers 1 steht eine Netzspannung zur Verfügung, die weitgehend vom Aufstellungsort, insbesondere von Land zu Land, unterschiedlich ist. Diese Netzspannung liegt auf einer elektrischen Versorgungsleitung, die in der Zeichnung mit dem Bezugszeichen 5 versehen ist und sich entlang des gesamten Rollenbandförderers 1 erstreckt. In bestimmten, regelmä-ßigen Abständen, beispielsweise alle 50 Meter, ist in die beiden Spuren ein sogenannter Einspeiseblock 6 eingefügt, der jeweils mit der Netzleitung 5 verbunden ist. Der Einspeiseblock 6 enthält eine Schaltungsanordnung, welche aus der gegebenenfalls örtlich sich unterscheidenden Netzspannung auf der Netzleitung 5 immer dieselbe Ausgangsspannung, nämlich die oben erwähnte Betriebsspannung der Antriebsmotoren von im Beispiel 48 V erzeugt.

Diese Ausgangsspannung wird von den Einspeiseblocks 6 auf zwei Ausgängen ausgegeben, an die jeweils eine Betriebsspannungsleitung 7 angeschlossen ist. Die beiden Betriebsspannungsleitungen 7 verlaufen parallel zu den beiden aus Rollenleisten 4 aufgebauten Spuren des Rollenbahnförderers 1 und versorgen alle angetriebenen Rollen 2 zwischen dem jeweiligen Einspeiseblock 6 und der letzten angetriebenen Rolle vor dem benachbarten Einspeiseblock 6. Auf diese Weise ist die gesamte Antriebsschaltung für die angetriebenen Rollen 2 in einzelne, galvanisch voneinander getrennte Segmente unterteilt.

Bei der Planung und Installation eines Rollenbahnförderers 1 braucht dessen Hersteller also nicht mehr auf die örtlichen Gegebenheiten hinsichtlich der Spannungsverhältnisse Rücksicht zu nehmen. Die Planung erfolgt vielmehr völlig unabhängig unter Zugrundelegung standardisierter Bauelemente, die daher in großer Stückzahl herstellerseitig vorgefertigt werden können. Dadurch, daß eine Vielzahl einzelner Antriebsmotoren verwendet werden, ergibt sich beim Ausfall eines einzelnen Antriebsmotors eine gewisse Redundanz, da dann benachbarte angetriebene Rollen 2 die Funktion der ausgefallenen Rolle 2 mit übernehmen können.

Bei einem in der Zeichnung nicht dargestellten Ausführungsbeispiel enthält der Einspeiseblock 6 zwei Schaltungsanordnungen, welche die oben beschriebene Umwandlung der Netzspannung, die auf der Leitung 5 liegt, auf die Betriebsspannung der angetriebenen Rollen 2 vornehmen. Jede dieser Schaltungsanordnungen versorgt dann nur einen Satz von angetriebenen Rollen 2 in dem benachbarten Segment, so daß beim Ausfall eines Schaltungsstranges der andere betriebsfähig bleibt und ein Notbetrieb des Rollenbahnförderers 1, wenn auch in dem fraglichen Segment mit geringerer Beschleunigung und geringerer Geschwindigkeit, möglich ist.

Die Ansteuerung der verschiedenen angetriebenen Rollen 2 erfolgt über ein industrieübliches Bussystem.

## Patentansprüche

1. Satz von Rollenbahnförderern, dessen Mitglieder jeweils umfassen
a) eine Vielzahl von in zwei parallelen Spuren angeordneten Rollen;
b) eine Vielzahl von elektrischen Antriebsmotoren für die angetriebenen Rollen;
c) einen Anschluß zur Verbindung mit der örtlichen Netzspannung;
**dadurch gekennzeichnet, daß**
d) jedes Mitglied des Satzes mindestens einen elektrischen Einspeiseblock (6) aufweist, der mit der örtlichen Netzspannung (5) verbindbar ist und hieraus eine Ausgangsspannung erzeugt, die für alle Mitglieder des Satzes dieselbe und kleiner oder gleich der kleinsten Netzspannung ist, für die ein Mitglied des Satzes ausgelegt ist;
e) die Antriebsmotoren der angetriebenen Rollen (2) für die Ausgangsspannung des Einspeiseblocks (6) ausgelegt sind.

2. Satz von Rollenbahnförderern nach Anspruch 1, **dadurch gekennzeichnet, daß** eine Vielzahl unterschiedlicher Einspeiseblocks (6) vorgesehen ist, die für unterschiedliche Netzspannungen ausgelegt sind, aber alle dieselbe Betriebsspannung für die Antriebsmotoren der angetriebenen Rollen (2) erzeugen können.

3. Satz von Rollenbahnförderern nach Anspruch 1, **dadurch gekennzeichnet, daß** nur eine Art von Einspeiseblock (6) vorgesehen ist, die so ausgestaltet ist, daß sie selbsttätig für verschiedene Netzspannungen an ihrem Eingang dieselbe Betriebsspannung für die Antriebsmotoren der angetriebenen Rollen (2) erzeugen kann.

4. Satz von Rollenbahnförderern nach einem der vorhergehenden Ansprüche, **dadurch gekennzeichnet, daß** jedes Mitglied eine Vielzahl von gleichen Einspeiseblocks (6) aufweist, die in Abständen voneinander angeordnet sind und jeweils die Antriebsmotoren der angetriebenen Rollen (2) in einem zugeordneten Segment des Rollenbahnförderers (1) speisen.

5. Satz von Rollenbahnförderern nach einem der vorhergehenden Ansprüche, **dadurch gekennzeichnet, daß** die Betriebsspannung der Antriebsmotoren für die angetriebenen Rollen (2) kleiner als 60 V ist.

6. Satz von Rollenbahnförderern nach Anspruch 5, **dadurch gekennzeichnet, daß** die Betriebsspannung der Antriebsmotoren für die angetriebenen Rollen (2) etwa 48 V ist.

7. Satz von Rollenbahnförderern nach Anspruch 5, **dadurch gekennzeichnet, daß** die Betriebsspannung der Antriebsmotoren für die angetriebenen Rollen (2) etwa 24 V ist.
